# EUROPEAN PATENT APPLICATION

(11) **EP 4 650 869 A1**
(43) Date of publication of application: **19.11.2025**
(21) Application number: 25177095.4
(22) Date of filing: 16.05.2025
(51) Int. Cl.: G03B 35/08, H04N 23/55

(54) **THREE-DIMENSIONAL IMAGING MODULE AND THREE-DIMENSIONAL SCANNER**

(30) Priority: 17.05.2024 CN 202410621858
(71) Applicant: Shining 3D Tech Co., Ltd., Hangzhou, Zhejiang 311258 (CN)
(72) Inventor: ZHANG, Wei, Hangzhou, 311258 (CN); ZHAO, Xiaobo, Hangzhou, 311258 (CN); MA, Chao, Hangzhou, 311258 (CN); FENG, Hailong, Hangzhou, 311258 (CN); JIANG, Jianfu, Hangzhou, 311258 (CN)
(74) Representative: Dehns Germany Partnerschaft mbB

(57) **Abstract**

The present invention provides a three-dimensional imaging module and a three-dimensional scanner. The three-dimensional imaging module includes: a first camera module (101), a second camera module (102), a lens mount (103), a first lens group (104), and a second lens group (105), wherein the lens mount (103) is provided with a first accommodating cavity (1031) and a second accommodating cavity (1032), the first camera module (101) is integrated at a bottom of the first accommodating cavity (1031), the first lens group (104) is integrated in the first accommodating cavity (1031), the second camera module (102) is integrated at a bottom of the second accommodating cavity (1032), and the second lens group (105) is integrated in the second accommodating cavity (1032). The three-dimensional scanner can include: a housing (11); and a three-dimensional imaging module (10) as provided in the present invention, wherein the three-dimensional imaging module is accommodated in the housing.

## Description

The invention claims the priority to Patent Application No. 202410621858.3, filed to the China National Intellectual Property Administration on May 17, 2024 and entitled "Three-dimensional Imaging Module and Three-dimensional Scanner".

### Technical Field

The present invention relates to the field of three-dimensional measurement technology, and in particular, to a three-dimensional imaging module and a three-dimensional scanner.

### Background

In an existing three-dimensional scanner, multiple modules are fixed by being mounted on a single base or being connected sequentially. This method of multiple connections leads to unstable precision; and after being placed for a long period of time, scanning precision drifts. Therefore, frequent calibration is required, leading to low usage efficiency and high costs.

### Summary

In view of this, the present invention provides a three-dimensional imaging module and a three-dimensional scanner.

Specifically, the present invention is implemented through the following technical solutions:
a first aspect of the present invention provides a three-dimensional imaging module, including: a first camera module, a second camera module, a lens mount, a first lens group, and a second lens group, wherein the lens mount is provided with a first accommodating cavity and a second accommodating cavity; the first camera module is integrated at a bottom of the first accommodating cavity; the first lens group is integrated in the first accommodating cavity; the second camera module is integrated at a bottom of the second accommodating cavity; and the second lens group is integrated in the second accommodating cavity; and
a second aspect of the present invention provides a three-dimensional scanner, the three-dimensional scanner can include:
   a housing; and a three-dimensional imaging module as provided in the first aspect of the present invention, wherein the three-dimensional imaging module is accommodated in the housing.

Through the described solutions, the present invention at least has the following beneficial effects:
by designing the structure of the accommodating cavities in the lens mount, at least two modules can be integrated in the lens mount; and compared to detachable connection methods, the described solutions of the present invention enhance the stability of the structure, reduce the frequency of required calibrations, extends the usage time after a single calibration, and lower the usage costs.

### Brief Description of the Drawings

Figs. 1a-1c are schematic diagrams of the structure of a three-dimensional imaging module according to an exemplary embodiment of the present invention.
Figs. 2a-2d are schematic diagrams of the structure of a three-dimensional imaging module integrated with a first light source, according to an exemplary embodiment of the present invention.
Figs. 3a-3b are schematic diagrams of the structure of a three-dimensional imaging module integrated with a texture imaging module, according to an exemplary embodiment of the present invention.
Fig. 4 is a schematic diagram of the structure of a three-dimensional imaging module with a reused lens group, according to an exemplary embodiment of the present invention.
Fig. 5 is a schematic diagram of the fixed structure of a lens group, according to an exemplary embodiment of the present invention.
Figs. 6a-6c are schematic diagrams of the fixed structure of another lens group, according to an exemplary embodiment of the present invention.
Fig. 7 is a schematic diagram of the structure of a three-dimensional scanner, according to an exemplary embodiment of the present invention.
Fig. 8 is a schematic diagram of the structure of a three-dimensional scanner, including an adapter module and a texture imaging module, according to an exemplary embodiment of the present invention.
Figs. 9a-9b are schematic diagrams of the structure of another three-dimensional imaging module, according to an exemplary embodiment of the present invention.

Reference numerals:
three-dimensional scanner 1; three-dimensional imaging module 10 or 90; housing 11;
first camera module 101; second camera module 102; first lens group 104; second lens group 105; first light source 106; texture imaging module 107; beam-splitting prism 108; third lens group 109; mask 1061; adhesive dispensing position 120;
lens mount 103; first accommodating cavity 1031; second accommodating cavity 1032; third accommodating cavity 1033; spacer ring 1034; pressing ring 1035; adhesive injection hole 1036;
adapter module 110; illumination module 1101; second light source 11011; bracket 11012; cover plate 11013; heating module 1102;
diagonal positioning pin 111; main control board 112; and core bracket 113; flexible circuit board 114.

### Detailed Description of the Embodiments

Reference will now be made in detail to exemplary embodiments, examples of which are illustrated in the accompanying drawings. When the following description refers to the accompanying drawings, unless otherwise indicated, the same numbers in different drawings represent the same or similar elements. The embodiments described in the following exemplary embodiments do not represent all embodiments consistent with the present invention. Rather, they are merely examples of apparatus and methods consistent with some aspects of the present invention, as detailed in the appended claims.

The terminology used herein is for the purpose of describing particular embodiments only and is not intended to be limiting of the present invention. As used in this invention and the appended claims, the singular forms "a", "the", and "said" are intended to include plural forms as well, unless the context clearly indicates otherwise. It should also be understood that the term "and/or" as used herein refers to and encompasses any or all possible combinations of one or more associated listed items.

It should be understood that although the terms first, second, third, etc. may be employed herein to describe various information, such information should not be limited by these terms. These terms are only used to distinguish information of the same type from each other. For example, the first information may also be referred to as the second information, and similarly, the second information may also be referred to as the first information without departing from the scope of the present invention. The word "if" as used herein may be construed as "when" or "upon" or "in response to determining", depending on the context.

With regard to the problem of precision drift of a three-dimensional scanner, the inventor has found through a careful study that the problem lies in that: in a three-dimensional scanner, there are typically multiple components, such as black-and-white cameras and their lenses, and the relative positions of these components need to be kept stable so as to form final accurate three-dimensional data. As each component is a separate module and is detachably mounted on the base, for example, with mounting gaps existing between a sensor and the base and between a lens and the base, these gaps increase the probability of drift after storage or collisions, leading to an increased frequency of calibration, which in turn raises both the usage cost and usage difficulty.

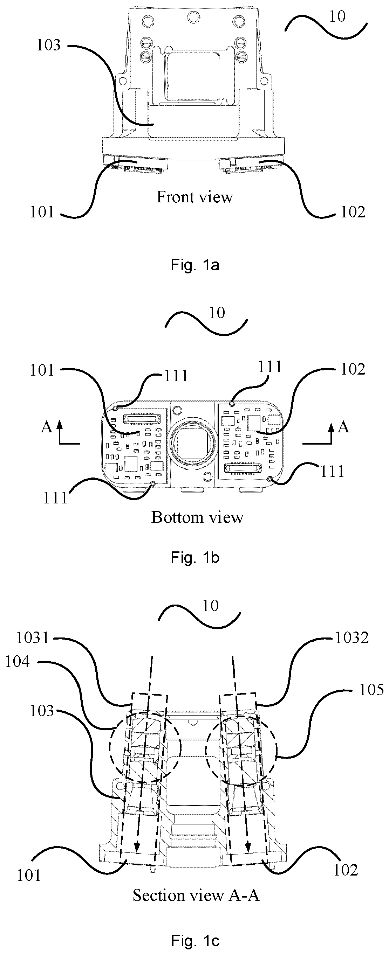

In this regard, referring to Figs. 1a-1c, the present invention provides a three-dimensional imaging module 10, including: a first camera module 101, a second camera module 102, a lens mount 103, a first lens group 104, and a second lens group 105.

The lens mount 103 is provided with a first accommodating cavity 1031 and a second accommodating cavity 1032; the first camera module 101 is integrated at a bottom of the first accommodating cavity 1031; the first lens group 104 is integrated in the first accommodating cavity 1031; the second camera module 102 is integrated at a bottom of the second accommodating cavity 1032; and the second lens group 105 is integrated in the second accommodating cavity 1032.

The first accommodating cavity 1031 is used to receive the light from an object to be scanned to form a first optical path, wherein the light from the object to be scanned is collected by the first camera module 101 after passing through the first lens group 104; and the second accommodating cavity 1032 is used to receive the light from the object to be scanned to form a second optical path, wherein the light from the object to be scanned is collected by the second camera module 102 after passing through the second lens group 105.

Through the described solution, the lens groups and the camera modules are integrated into a single lens mount 103, rather than being formed into independent modules through their respective housings. As a result, the internal structures of the three-dimensional imaging module can be fully fixed without considering disassembly and reassembly, thereby significantly reducing the likelihood of drift. Thus, this improves the overall measurement precision of the three-dimensional scanner using the three-dimensional imaging module, reduces the frequency of required calibrations, and lowers the usage cost.

It should be understood that, in the present invention, the first camera module 101 and the second camera module 102 can be cameras of any technical form, such as color cameras or black and white cameras using CMOS (Complementary Metal-Oxide-Semiconductor) technology/CCD (Charge-Coupled Device) technology.

As shown in Figs. 1a-1c, the bottom view perspective displays the back sides of the first camera module 101 and the second camera module 102, and the front side of the first camera module 101, which is the side that collects light, faces the direction opposite to the arrow of the first optical path in the A-A sectional view. That is, the orientation of the first camera module 101 is opposite to the direction in which the light enters, allowing for the acquisition/collection of the light. Similarly, the orientation of the second camera module 102 is opposite to the direction in which the light enters in the second optical path, achieving a function similar to that of the first camera module 101.

It can be understood that, in the present invention, in order to enable the entry of light, for each of the first accommodating cavity 1031 and the second accommodating cavity 1032, an opening needs to be provided at the position where the lens group is located, so that light can enter the accommodating cavities, and pass through the lens groups to form images on the camera modules. In another embodiment, the lens mount 103 can be made of a transparent material in the portions near the mounting positions of the lens groups to allow light to smoothly enter the accommodating cavities; in order to ensure that light can only reach the camera modules through the lens groups, the lens mount 103 can be made of a composite material, with the portions near the mounting positions of the lens groups made of an opaque material; and the lens mount 103 can be made entirely of a transparent material, with an opaque coating applied to the inner walls of the accommodating cavities or with opaque components added. The foregoing embodiments are merely exemplary, and if the solutions can be simply obtained by substitution according to the embodiments of the present invention, all the solutions shall fall within the scope of protection of the present invention.

In the embodiment described above, the first light can be from a light source (which can be a laser or a laser module) that is independent of the three-dimensional imaging module 10, as used in conventional solutions. The advantage of this design lies in that the mounting position of the light source can be determined according to actual situations, and can be flexibly arranged according to the design and usage requirements of the system, thereby allowing for better adaptation to different application scenarios and requirements. The independent arrangement of the laser can also reduce the complexity of the system, and simplify the adjustment and maintenance work of the system. In addition, this design also helps improve the stability and reliability of the system, and ensures that the first light can accurately illuminate the target object, thereby achieving accurate acquisition of spatial information. In conclusion, by a light source independent from the three-dimensional imaging module, the system can operate more flexibly, stably and efficiently, thereby providing a better usage experience for users.

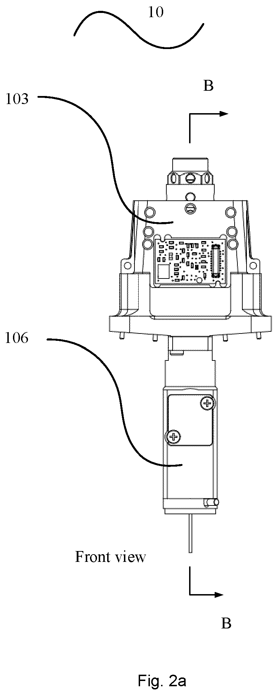

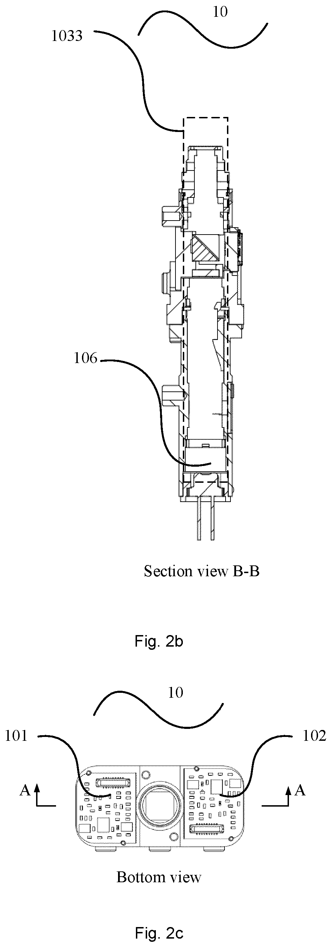

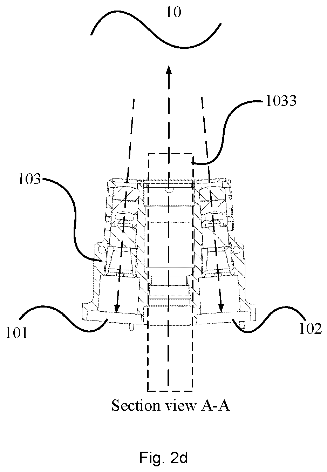

However, the inventor finds that the separate arrangement of the laser and the three-dimensional imaging module still brings a problem of precision drift. To further mitigate the problem of precision drift, on the basis of the foregoing embodiment, and with reference to Figs. 2a-2d, the lens mount 103 can further include a third accommodating cavity 1033 provided between the first accommodating cavity 1031 and the second accommodating cavity 1032; the three-dimensional imaging module 10 further includes a first light source 106 integrated at a bottom of the third accommodating cavity 1033, and used to emit a first light toward an object to be scanned, so that the first camera module 101 and the second camera module 102 respectively receive, through the first lens group 104 and the second lens group 105, a light reflected by the object to be scanned; and the light reflected by the object to be scanned at least includes a light reflected by the object to be scanned from the first light.

The light reflected by the object to be scanned can include only the light reflected by the object to be scanned from the first light, can also include light reflected by the object to be scanned from ambient light, and can also include light reflected by the object to be scanned from light emitted by other light sources.

Through the described solution, a clever design of a plurality of accommodating cavities is proposed, wherein the first light source 106 in the third accommodation cavity 1033 is used to emit the first light; sensors in the first accommodating cavity 1031 and the second accommodating chamber 1032 are used to receive light that at least includes the light reflected by the object to be scanned from the first light; as both emission and reception occur within the same module, this reduces the number of gaps between the modules and the base; and this reduction in the number of gaps means a lower probability of displacement, further improving the stability and reducing the usage costs.

It should be understood that any solution capable of enabling the first light emitted by the first light source 106 to be reflected and enter the camera module in the first accommodating cavity 1031 and/or the second accommodating cavity 1032 can be applied in the present invention.

In one embodiment, the first accommodating cavity 1031 and the second accommodating cavity 1032 can be symmetrically arranged relative to an axis of the third accommodating cavity 1033. The symmetrical arrangement of the dual camera modules with the projection optical path centrally located not only enables a compact overall shape and structure, but also ensures that the emission path of the first light from the first light source 106 intersects with both the first optical path and the second optical path at the same point. Such a design ensures that, after the first light irradiates on the object to be scanned, it is precisely reflected into the first accommodating cavity 1031 and the second accommodating cavity 1032, thereby enabling the acquisition of spatial information. By ensuring the precise intersection of the path of the first light, the system can acquire the spatial information of the target object more accurately, thereby improving the imaging quality and accuracy. In addition, this design also helps simplify the structure and adjustment of the system, improving the stability and reliability of the system, and providing a better usage experience for users.

It should be noted that, the first light source 106 can be a monochromatic light source, and the first light emitted by the first light source 106 can be a line-structured light or a surface-structured light. Specifically, the first light source 106 can be a laser, a blue light lamp, or an infrared light lamp, and the first light can be laser light, blue light, or infrared light. Therefore, the specific implementation of the first light source is not limited.

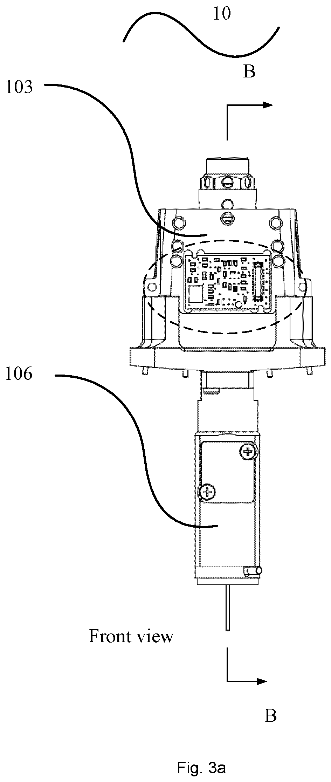

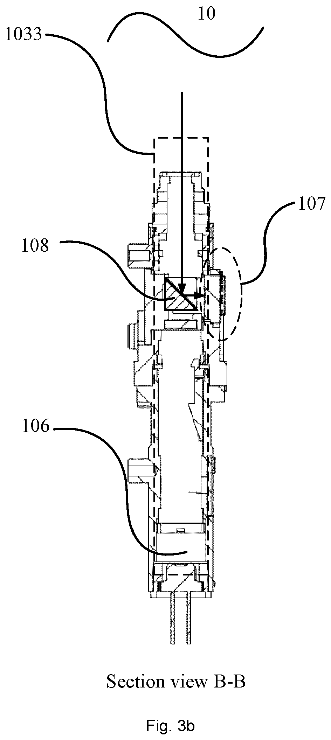

On the basis of the described solution, the inventor further makes an improvement. Referring to Figs. 3a-3b, a texture imaging module 107 can be provided in the third accommodating cavity 1033, and the texture imaging module 107 can be a texture camera, for example, a color camera. The three-dimensional imaging module 10 further includes a beam-splitting prism 108, and the beam-splitting prism 108 is used to transmit the first light emitted by the first light source 106 and to reflect a light from the object to be scanned (the light reflected by the object to be scanned) to the texture imaging module 107.

As an example, the texture imaging module 107 is integrated on a side of the third accommodating cavity 1033, an orientation of the texture imaging module 107 can be perpendicular to a direction in which the first light source 106 emits the first light, and an inclined surface of the beam-splitting prism 108 can form a 45-degree angle with both the texture imaging module 107 and the first light emitted by the first light source 106.

The inclined surface of the beam-splitting prism 108 is a beam-splitting surface, and the beam-splitting surface is coated with a film. The beam-splitting prism 108 is used to separate the collected incident light or reflected light according to different wavelengths, and then reflect or transmit the light in different directions. For example, the beam-splitting prism 108 includes an ordinary beam-splitting prism (BS) and a polarizing beam-splitting prism (PBS). The ordinary beam-splitting prism uses the refraction and reflection of light to separate white light into different colors, while the polarizing beam-splitting prism uses the polarization properties of light to divide the incident light into two mutually perpendicular polarized light beams.

Through the described solution, when spatial information needs to be scanned and acquired, the first light source 106 generates the first light, the first light directly irradiates on the beam-splitting prism 108, the first light passes straight through the beam-splitting prism 108 and then is emitted from the accommodating cavity, and the emitted first light irradiates on the object and then is reflected into the first camera module 101 in the first accommodating cavity 1031 and the second camera module 102 in the second accommodating cavity 1032, thus enabling the acquisition of spatial information. When color or texture information needs to be scanned and acquired, ambient light or light from other light sources irradiates on the object to be scanned, the object to be scanned reflects the ambient light or the light from other light sources, and the reflected light passes through the beam-splitting surface of the beam-splitting prism 108 and is reflected by the beam-splitting prism 108 to the texture imaging module 107, thereby enabling the acquisition of color or texture information.

As both the first light source 106 and the texture imaging module 107 can use the space of the third accommodating cavity 1033, the overall size of the three-dimensional imaging module can be controlled to be small; and this makes it suitable for application in a small three-dimensional scanner, such as an oral three-dimensional scanner or an ear cavity three-dimensional scanner.

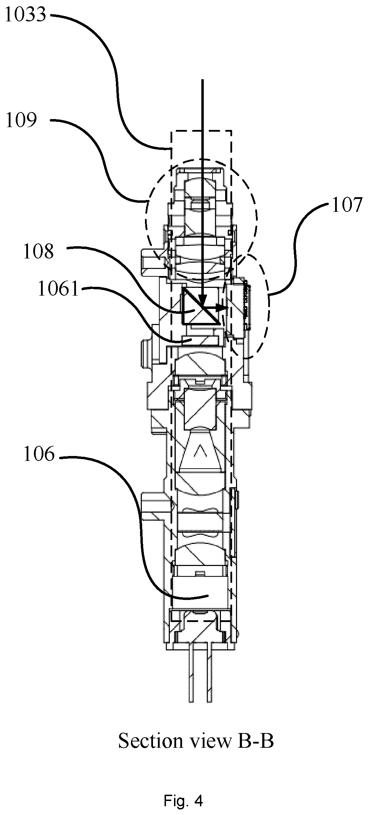

Meanwhile, sharing the same optical path also allows for sharing the same lens group. Referring to Fig. 4, a third lens group 109 can be provided in the third accommodating cavity 1033; the third lens group 109 is integrated at a top of the third accommodating cavity 1033; and the third lens group 109 is located between the beam-splitting prism 108 and the top of the third accommodating cavity 1033, and is used to project the first light, transmitted by the beam-splitting prism 108, onto the object to be scanned, and to project the light from the object to be scanned onto the beam-splitting prism 108. For example, the first light emitted by the first light source 106 can be projected and imaged using the third lens group 109, and the texture imaging module 107 can also use the third lens group 109 for projection imaging. By using a single lens group to achieve multiple functions, the cost can be reduced, the assembly is simple, and the optical path is smaller, thereby reducing the volume of the three-dimensional imaging module 10; and this makes it suitable for application in a small three-dimensional scanner 1, such as an oral three-dimensional scanner or an ear cavity three-dimensional scanner. Meanwhile, reusing the lens group also reduces the number of lens groups, and a decrease in the number of the lens groups means fewer areas where the precision drift occurs, thus also improving the overall stability of the three-dimensional imaging module.

On this basis, the distance between the first light source 106, which emits the first light, and the bottom of the third accommodating cavity 1033 can be reasonably adjusted, so that while the texture imaging module 107 can use the third lens group 109 to realize imaging, the first light source 106 can also directly use the third lens group 109 for projection imaging.

In another embodiment, in addition to the lens group between the beam-splitting prism 108 and the first light source 106, an additional lens group can be added for adjusting the projection imaging capability of the first light source 106. This design ensures that when the projection imaging capability of the third lens group 109 is too large or too small for the first light source 106, the additional lens group allows the first light source 106 to function properly. This adjustment capability makes the system more flexible, allowing it to adapt to different working environments and requirements, thereby improving the overall stability and reliability of the system. In addition, this design also helps reduce the cost and complexity of the system, enhancing the performance and competitiveness of the product.

As shown in Fig. 4, a mask 1061 can be provided in the third accommodating cavity 1033, and the mask 1061 is provided between the first light source 106 and the beam-splitting prism 108. The mask 1061 includes an image, and the first light emitted by the first light source 106 passes sequentially through the mask 1061, the beam-splitting prism 108, and the third lens group 109 before being projected onto the object to be scanned. As an example, the mask 1061 can be a color grating sheet or a black-and-white grating sheet, and is used to modulate the first light; and when multiple first light beams pass through the mask 1061, a color-coded image or a black-and-white coded image is automatically generated and projected onto the object to be scanned.

In another embodiment, the lens mount 103 can further include a third accommodating cavity 1033 provided between the first accommodating cavity 1031 and the second accommodating cavity 1032; the three-dimensional imaging module 10 can further include a texture imaging module 107 and a third lens group 109, wherein the texture imaging module 107 is integrated at the bottom of the third accommodating cavity 1033, and the third lens group 109 is integrated in the third accommodating cavity 1033, and is used to project an image of the object to be scanned onto the texture imaging module 107. Through the described solution, the texture imaging module 107 can be integrated in the third accommodating cavity 1033. The first camera module 101 in the first accommodating cavity 1031 and the second camera module 102 in the second accommodating cavity 1032 can acquire spatial information with the help of the first light source 106 (laser), which is located outside the third accommodating cavity. This design not only makes the entire system more compact and integrated, reducing the volume of the three-dimensional imaging module 10, and making it applicable to a small three-dimensional scanner 1, such as an oral three-dimensional scanner or an ear cavity three-dimensional scanner, but also effectively enhances the performance and functionality of the product, providing a more convenient and efficient usage experience for users. In addition, this integrated design can also help reduce the cost and complexity of the system, enhancing the production efficiency and product competitiveness.

On the basis of the described solution, the lens mount 103 can include a plurality of diagonal positioning pins 111; the diagonal positioning pins 111 are used to fix diagonals of components to limit the movements of the first camera module 101 and/or the second camera module 102, as well as the first lens group 104 and/or the second lens group 105 relative to the lens mount. The components at least include the first camera module 101, the second camera module 102, the first lens group 104, and the second lens group 105.

In one embodiment, every pair of diagonal positioning pins 111 can be arranged on the diagonals of the first camera module 101, the second camera module 102, the first lens group 104, and the second lens group 105. This arrangement can limit the movements of the first camera module 101 and the first lens group 104 relative to the lens mount 103 in a plane perpendicular to the first optical path, and limit the movements of the second camera module 102 and the second lens group 105 relative to the lens mount 103 in a plane perpendicular to the second optical path.

By the diagonal positioning pins, the diagonals of any component can be fixed, so as to ensure that when the three-dimensional imaging module is subjected to external forces such as vibration, falls, or impacts, the center distance between the component in the first accommodating cavity 1031 and the component in the second accommodating cavity 1032 can be kept stable. This design can effectively improve the stability and durability of the product, and protect the camera modules and the internal components thereof, ensuring that the system can function properly and provide high-quality imaging results in various environments. In addition, this design reduces the probability of drift, enhances the overall measurement precision of the three-dimensional scanner 1 that uses the three-dimensional imaging module 10, reduces the frequency of calibrations required for the three-dimensional scanner 1, and lowers the usage costs of the three-dimensional scanner 1.

As shown in Figs. 1a-1c, every pair of diagonal positioning pins 111 can be arranged on the diagonals of the first camera module 101 and the second camera module 102 to ensure that when the three-dimensional imaging module is subjected to external forces such as vibration, falls, or impacts, the center distance of the two camera modules can be kept stable. This design can effectively improve the stability and durability of the product, and protect the camera modules and the internal components thereof, ensuring that the system can function properly and provide high-quality imaging results in various environments. In addition, this design reduces the probability of drift, enhances the overall measurement precision of the three-dimensional scanner 1 that uses the three-dimensional imaging module 10, reduces the frequency of calibrations required for the three-dimensional scanner 1, and lowers the usage costs of the three-dimensional scanner 1.

The diagonal positioning pins are an exemplary positioning method in the present invention. In addition, the present invention can also apply the content of other technical solutions. For example, any solutions that a person skilled in the art can undoubtedly obtain by substitution according to the teachings of the present invention can also be applied to the present invention, and shall fall within the scope of protection of the present invention.

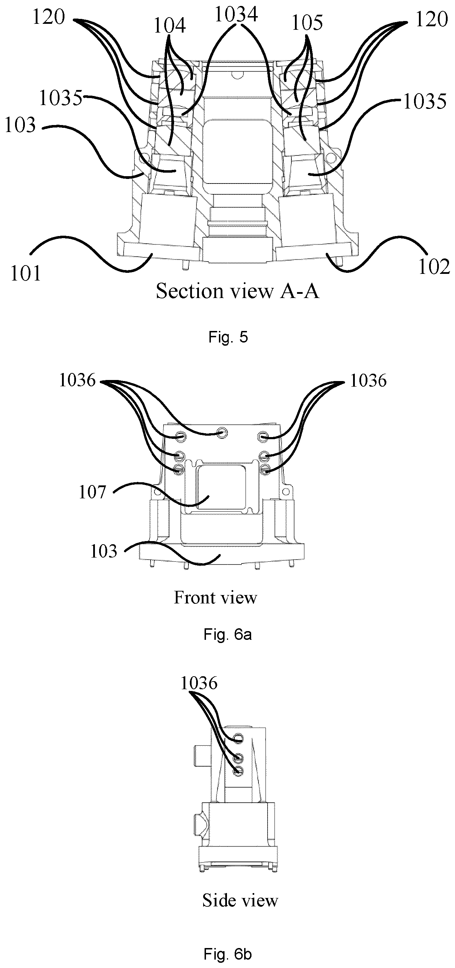

On the basis of any of the described embodiments, referring to Fig. 5, the lens mount 103 can include at least one pressing ring 1035 and at least one spacer ring 1034; the spacer ring 1034 is mounted between two lenses of the first lens group 104 and/or the second lens group 105, and is used to axially position the lenses of the first lens group 104 and/or the second lens group 105; and the pressing ring 1035 is mounted at two ends of the first lens group 104 and/or the second lens group 105, and is used to fix the first lens group 104 and/or the second lens group 105.

After the assembly is completed, the three-dimensional imaging module 10 has the following structure: the lens mount 103 includes two lens groups, and each lens group is composed of multiple lenses. The spacer ring 1034 is mounted between two lenses of the first lens group 104 or the second lens group 105, and the spacer ring 1034 is located at a specific position between the lenses to ensure that the spacing and positioning of the lenses meet the design requirements. The pressing ring 1035 is mounted at two ends of the entire first lens group 104 or second lens group 105, and is used to fix the lens group and ensure the position stability thereof.

The entire lens mount has a compact structure, which can effectively protect the lenses, maintain stable positional relationships, and provide good optical performance. In addition, this structure can reduce the probability of drift, improve the overall measurement precision of the three-dimensional scanner 1 using the three-dimensional imaging module 10, reduce the frequency of calibrations required for the three-dimensional scanner 1, and lower the usage costs of the three-dimensional scanner 1.

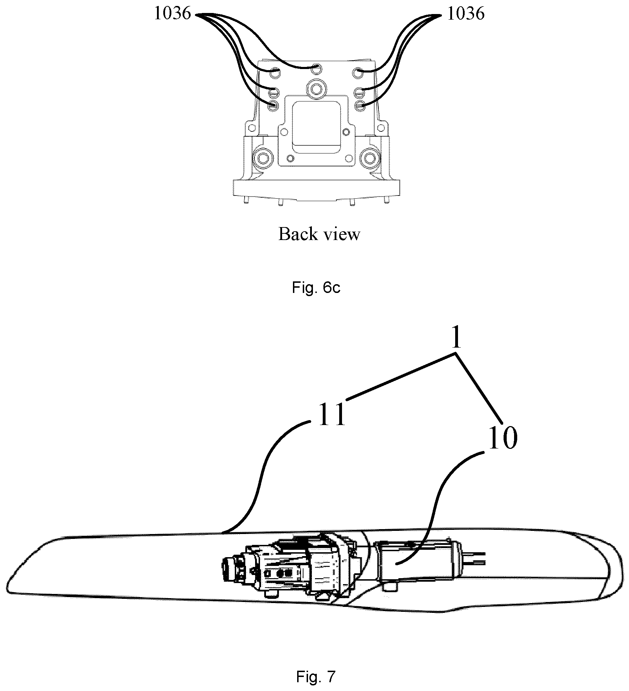

Referring to Figs. 6a-6c, the lens of the first lens group 104 or the second lens group 105 can include an adhesive dispensing position 120; the lens mount 103 can further include an adhesive injection hole 1036; the adhesive injection hole 1036 corresponds to the adhesive dispensing position 120; and the adhesive injection hole 1036 is used to allow adhesive to flow into the adhesive dispensing position 120.

As shown in Figs. 6a-6c, there are a plurality of adhesive injection holes 1036 and the plurality of adhesive injection holes can be distributed at any position on the front, back, or side surfaces of the product, and can also be simultaneously distributed at a plurality of positions. This design allows adhesive to be injected at different positions according to actual needs, ensuring that all parts of the product are uniformly stressed and fixed. The positions and the number of the adhesive injection holes 1036 can be adjusted according to the design requirements and functional needs of the product, so as to meet different usage scenarios and process requirements.

Through the described solution, the designed adhesive injection holes 1036 and adhesive dispensing positions provide better attachment positions for adhesive, so that the lens mount and the lenses can be firmly fixed using the adhesive, thereby reducing the probability of displacement. In addition, the adhesive fixation can effectively achieve the effect of vibration isolation, and can improve the quality of three-dimensional scanning.

As an example, the adhesive can be a low-expansion structural adhesive, and can also be other types of adhesive, which is not specifically limited herein.

As an example, the adhesive can be a low-expansion structural adhesive with an expansion coefficient lower than or equal to 90 ppm, such as a low-expansion coefficient epoxy structural adhesive, which exhibits minimal dimensional changes with temperature variations. This further reduces the probability of displacement between the lens mount and the lenses, improve the overall measurement precision of the three-dimensional scanner 1 using the three-dimensional imaging module 10, reduce the frequency of calibrations required for the three-dimensional scanner 1, and lower the usage costs of the three-dimensional scanner 1.

In the present invention, the three-dimensional imaging module 10 in any embodiment can be used for devices such as a three-dimensional scanner. The three-dimensional scanner can be a scanner, such as an oral scanner, an ear cavity scanner, a facial scanner, an industrial scanner, a professional scanner, or a product internal cavity scanner, and can implement three-dimensional reconstruction of items or scenes, such as teeth, ear cavities, human faces, human bodies, industrial products, industrial devices, pipelines, cultural relics, artworks, prosthetics, medical instruments, and buildings.

Accordingly, referring to Fig. 7, the present invention provides a three-dimensional scanner 1. The three-dimensional scanner 1 can include: a housing 11; and a three-dimensional imaging module 10 as provided in any one of the embodiments, wherein the three-dimensional imaging module 10 is accommodated in the housing 11.

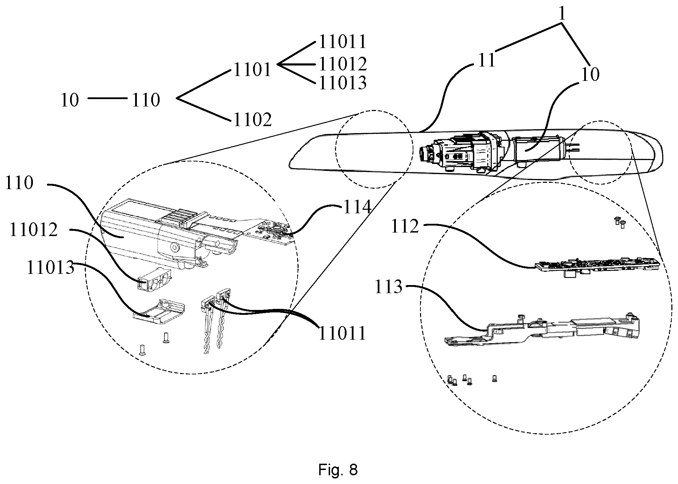

On this basis, referring to figure 8, in one embodiment of the present invention, the three-dimensional scanner 1 can further include an adapter module 110 and a texture imaging module 107; the texture imaging module 107 is used to collect a color information of an object to be scanned, and the three-dimensional imaging module 10 can be connected with the adapter module 110; the adapter module 110 includes an illumination module 1101 and a heating module 1102 (not shown in the figures, and can be mounted at any position of the adapter module 110); the illumination module 1101 includes a second light source 11011, a bracket 11012, and a cover plate 1013; the second light source 11011 is used to provide an illumination environment for the texture imaging module 107; the bracket 11012 is used to fix a position of the second light source 11011; and the cover plate 11013 is used to fix the second light source 11011 and the bracket 11012 in the adapter module 110.

In another embodiment, the three-dimensional scanner 1 can further include a core bracket 113, a main control board 112, and a flexible circuit board 114; the three-dimensional imaging module 10 and the main control board 112 are electrically connected through the flexible circuit board 114; the three-dimensional imaging module and the main control board are fixed on the core bracket; and the core bracket is made of a high thermal conductivity material with a thermal conductivity coefficient greater than or equal to 200 W/m•K, and can be used to provide uniform temperature distribution and heat dissipation for the three-dimensional imaging module and the main control board. Preferably, the thermal conductivity coefficient of the high thermal conductivity material is greater than or equal to 200 W/m•K, and less than or equal to 350 W/m•K.

As an example, the core bracket 113 can be made of aluminum alloy, which can be used to provide uniform temperature distribution and heat dissipation. The three-dimensional imaging module 10 and the main control board 112 are mounted and fixed on the core bracket 113 from front to back along the length direction of the core bracket 113.

As an example, the first light source 106 and the second light source 11011 are different types of light sources. The second light source 11011 can emit the second light; as another example, the second light source can be from a mixed-color light source. As another example, the mixed-color light source can be an RGB mixed-color light source or a yellow-green-blue mixed-color light source. As another example, the second light source 11011 can be a white-light fill light, and the fill light can be an LED, a metal halide lamp, a fluorescent lamp, high-pressure sodium lamp, an incandescent lamp, an iodine-tungsten lamp, or a xenon lamp. Therefore, the specific implementation of the second light source 11011 is not limited.

The second light source 11011 provides an illumination environment and has a minimal impact on precision. Therefore, its independence from the three-dimensional imaging module does not have a great impact on the quality of the three-dimensional scanning. By placing the illumination module 1101 in other positions through a flexible circuit board, more space can be reserved for the three-dimensional imaging module, allowing for a more reasonable arrangement of the internal layout.

The optical axis of the second light source 11011 is not coaxial with the optical axis of the third lens group 109 (the first light source 106). When the texture imaging module 107 is in operation, the second light source 11011 emits the second light to provide supplementary illumination for the object to be scanned. Specifically, the second light source 11011 can irradiate on the object to be scanned using off-axis or side-axis lighting.

As an example, the first light emitted by the first light source 106 sequentially passes through the mask 1061, the beam-splitting prism 108, and the third lens group 109 before being projected to the object to be scanned; the second light source 11011 emits the second light to provide supplementary illumination for the object to be scanned; and the object to be scanned then reflects the received light outward. The light received by the object to be scanned is at least from the first light (for example, laser light) emitted by the first light source 106 and the second light (for example, white light) emitted by the second light source 1011, wherein the first light is modulated by the mask 1061 and includes the image of the mask 1061.

The light from the object to be scanned is reflected to the third lens group 109, and after passing through the third lens group 109, the light is reflected by the beam-splitting prism 108 to reach the texture imaging module 107, and the texture imaging module 107 receives the light for texture imaging, so as to acquire color texture information of the object to be scanned.

The light from the object to be scanned enters the first accommodating cavity 1031 through the first optical path, i.e. being collected by the first camera module 101 after passing through the first lens group 104 and; and the light from the object to be scanned enters the second accommodating cavity 1032 through the second optical path, i.e. being collected by the second camera module 102 after passing through the second lens group 105. The first camera module 101 and the second camera module 102 receive the light for imaging, acquiring spatial information of the object to be scanned.

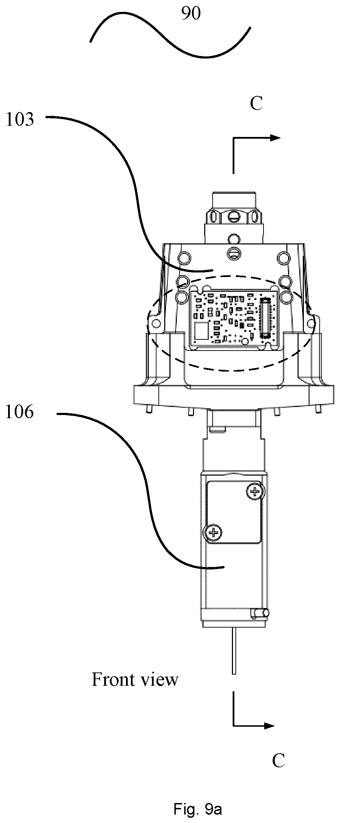

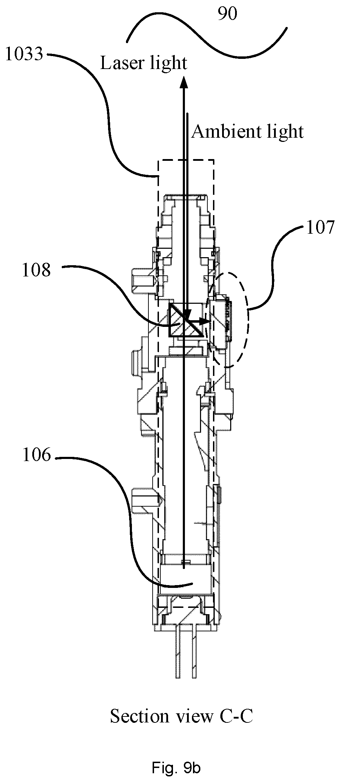

Correspondingly, referring to Figs. 9a-9b, the present invention further provides another three-dimensional imaging module 90, including:
an accommodating cavity, a first light source 106, a texture imaging module 107, and a beam-splitting prism 108; the first light source 106 is integrated at a bottom of the accommodating cavity, and is used to emit a first light toward an object to be scanned; the texture imaging module 107 is integrated in the accommodation cavity, and an orientation of the texture imaging module 107 is perpendicular to a direction in which the first light source 106 emits the first light; an inclined surface of the beam-splitting prism 108 forms a 45-degree angle with both the texture imaging module 107 and the first light emitted by the first light source 106, and is used to reflect a light from the object to be scanned to the texture imaging module 107.

As an example, emitting the first light toward the object to be scanned can be understood as projecting laser stripes or a laser pattern to the surface of the object to be scanned.

Through the described solution, the reflection/projection effect of the beam splitter prism 108 enables at least the functions of laser emission and texture scanning to be achieved within the same accommodating cavity.

Specifically, referring to Figs. 9a-9b, taking the first light as laser light as an example, when spatial information needs to be scanned and acquired, the first light source 106 generates laser light, and the laser light either directly enters or passes through the mask 1061 into the beam-splitting prism 108, so that the laser light passes straight through the beam-splitting prism 108 and then is emitted from the accommodating cavity, and the emitted laser light irradiates on the object and then is reflected into a sensor for collecting spatial information. The sensor for collecting spatial information can be an independent sensor in the prior art, such as a black-and-white camera, which is not described in this invention one by one. When texture needs to be to collected, natural light/ambient light reflected by an external object enters the accommodation cavity and irradiates on the inclined surface of the beam-splitting prism 108 at an angle of 45°, and then is deflected by 90°, and irradiates on the texture imaging module 107, so that the texture imaging module 107 can acquire texture information of the object to be scanned. The sensor for collecting spatial information can be an independent sensor in the prior art, such as a color camera, which is not described in this invention one by one.

Therefore, the solution provided in this invention enables the reuse of the optical path, so that the overall volume of the three-dimensional imaging module is relatively small, and this makes it suitable for application in a small three-dimensional scanner, such as an oral three-dimensional scanner or an ear cavity three-dimensional scanner.

In addition, as the texture imaging module 107 and the first light source 106 are integrated in the accommodation cavity of the lens mount, compared to conventional solutions in which modules are detachably connected, the solution of the present invention also improves the stability of the structure, reduces the frequency of required calibrations, extends the usage time after a single calibration, and lowers the usage costs.

It can be understood that, taking the first light as a laser light as an example, in Figs. 9a-9b, the path of the first light has been offset for the sake of observing the path of laser light and the path of ambient light more clearly. In the actual solution, the paths of both can coincide along the vertical direction in Figs. 9a-9b.

Embodiments of the subject matter and functional operations described in this description can be implemented in hardware, including the structures disclosed in this description and their structural equivalents, or in combinations of one or more of them.

Others that should fall within the scope of the present invention include, but are not limited to, similar implementations or devices, even with slightly different structures or functions. Equivalent alternatives to the particular technical principles described in this invention. Technology improvements or variations based on the concepts disclosed herein. Other devices or systems employing similar principles, but with different specific implementations, derivative products or methods based on the technical concepts disclosed herein. Other technical solutions related to the technical field of the present invention, even if not explicitly described in the present invention. In conclusion, the scope of protection of the present invention should be determined according to the requirements of the patent law and the understanding of the technical contribution, including protection of all reasonable ranges covering the technical principle disclosed in the present invention.

While this description contains many specific implementation details, these should not be construed to limit the scope of any invention or the claimed invention, but rather to primarily describe features of particular embodiments of particular inventions. Certain features described in multiple embodiments within this description may also be implemented in combination in a single embodiment. In another aspect, various features described in a single embodiment can also be implemented separately in multiple embodiments or in any suitable subcombination. Furthermore, although features may function in certain combinations as described above and are even initially claimed as such, one or more features from a claimed combination can in some cases be excised from the combination, and the claimed combination may be directed to a subcombination or variation of a subcombination.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. A three-dimensional imaging module, comprising:
a first camera module (101), a second camera module (102), a lens mount (103), a first lens group (104), and a second lens group (105), wherein the lens mount (103) is provided with a first accommodating cavity (1031) and a second accommodating cavity (1032), the first camera module (101) is integrated at a bottom of the first accommodating cavity (1031), the first lens group (104) is integrated in the first accommodating cavity (1031), the second camera module (102) is integrated at a bottom of the second accommodating cavity (1032), and the second lens group (105) is integrated in the second accommodating cavity (1032).

2. The three-dimensional imaging module according to claim 1, wherein the lens mount (103) further comprises a third accommodating cavity (1033) provided between the first accommodating cavity (1031) and the second accommodating cavity (1032); the three-dimensional imaging module (10) further comprises a first light source (106) integrated at a bottom of the third accommodation cavity (1033), which is used to emit a first light toward an object to be scanned, so that the first camera module (101) and the second camera module (102) respectively receive, through the first lens group (104) and the second lens group (105), a light reflected by the object to be scanned; and the light reflected by the object to be scanned at least comprises a light reflected by the object to be scanned from the first light.

3. The three-dimensional imaging module according to claim 2, wherein a texture imaging module (107) is provided in the third accommodating cavity (1033); the three-dimensional imaging module (10) further comprises a beam-splitting prism (108); and the beam-splitting prism (108) is used to transmit the first light emitted by the first light source (106) and reflect a light from the object to be scanned to the texture imaging module (107).

4. The three-dimensional imaging module according to claim 3, wherein the three-dimensional imaging module (10) further comprises a third lens group (109), and the third lens group (109) is integrated at a top of the third accommodating cavity (1033), and is used to project the first light transmitted by the beam-splitting prism (108) onto the object to be scanned and to reflect the light from the object to be scanned to the beam-splitting prism (108); and
the texture imaging module (107) is integrated on a side of the third accommodating cavity (1033), an orientation of the texture imaging module (107) is perpendicular to a direction in which the first light source emits the first light, and an inclined surface of the beam-splitting prism (108) forms a 45-degree angle with both the texture imaging module (107) and the first light emitted by the first light source (106).

5. The three-dimensional imaging module according to claim 1, wherein the lens mount (103) further comprises a third accommodating cavity (1033) provided between the first accommodating cavity (1031) and the second accommodating cavity (1032); the three-dimensional imaging module (10) further comprises a texture imaging module (107) and a third lens group (109); the texture imaging module (107) is integrated at a bottom of the third accommodating cavity (103); and the third lens group (109) is integrated in the third accommodating cavity (1033), and is used to project an image of the object to be scanned onto the texture imaging module (107).

6. The three-dimensional imaging module according to any one of claims 1 to 5, wherein the lens mount (103) comprises a plurality of diagonal positioning pins (111); and the diagonal positioning pins (111) are used to fix diagonals of components to limit movements of at least one of the first camera module (101) and the second camera module (102), as well as at least one of the first lens group (104) and the second lens group (105) relative to the lens mount (103).

7. The three-dimensional imaging module according to any one of claims 1 to 5, wherein the lens mount (103) comprises a pressing ring (1035) and a spacer ring (1034); the spacer ring (1034) is mounted between two lenses of at least one of the first lens group (104) and the second lens group (105), and is used to axially position the lenses of at least one of the first lens group (105) and the second lens group (105); and the pressing ring (1035) is mounted at two ends of at least one of the first lens group (104) and the second lens group (105), and is used to fix at least one of the first lens group (104) and the second lens group (1051).

8. The three-dimensional imaging module according to claim 7, wherein a lens of the first lens group (104) and/or the second lens group (105) comprises an adhesive dispensing position (120); the lens mount (103) further comprises an adhesive injection hole (1036); the adhesive injection hole (1036) corresponds to the adhesive dispensing position (120); and the adhesive injection hole (1036) is used to allow adhesive to flow into the adhesive dispensing position (120).

9. The three-dimensional imaging module according to claim 8, wherein the adhesive is a low-expansion structural adhesive.

10. The three-dimensional imaging module according to claim 2 or 5, wherein the first accommodating cavity (1031) and the second accommodating cavity (1032) are symmetrically arranged relative to an axis of the third accommodating cavity (1033).

11. The three-dimensional imaging module according to claim 3, wherein an inclined surface of the beam-splitting prism (108) is coated with a film.

12. The three-dimensional imaging module according to claim 3, wherein a mask (1061) is provided in the third accommodating cavity (1033), and the mask (1061) is provided between the first light source (106) and the beam-splitting prism (108).

13. A three-dimensional scanner, comprising:
a housing (11); and
a three-dimensional imaging module (10) according to any one of claims 1-12, wherein the three-dimensional imaging module (10) is accommodated in the housing (11).

14. The three-dimensional scanner according to claim 13, wherein the three-dimensional scanner further comprises an adapter module (110) and a texture imaging module (107); the texture imaging module (107) is used to collect a color information of an object to be scanned, and the three-dimensional imaging module (10) can be connected with the adapter module (110); the adapter module (110) comprises an illumination module (1101) and a heating module (1102); the illumination module (1101) comprises a second light source (11011), a bracket (11012), and a cover plate (11013); the second light source (11011) is used to provide an illumination environment for the texture imaging module (107); the bracket (11012) is used to fix a position of the second light source (11011); and the cover plate (11013) is used to fix the second light source (11011) and the bracket (11012) in the adapter module (110).

15. The three-dimensional scanner according to claim 13, further comprising a core bracket (113), a main control board (112), and a flexible circuit board (114), wherein the three-dimensional imaging module (10) and the main control board (112) are electrically connected through the flexible circuit board (114); the three-dimensional imaging module (10) and the main control board (112) are fixed on the core bracket (113); and the core bracket (113) is made of a high thermal conductivity material.
